# EUROPEAN PATENT SPECIFICATION

(11) **EP 0 551 603 B1**
(45) Date of publication and mention of the grant of the patent: **02.12.1998**
(21) Application number: 92120454.1
(22) Date of filing: 01.12.1992
(51) Int. Cl.: G11B 5/39

(54) **Magneto-resistive head**
Magnetoresistiver Kopf
Tête magnétoresistive

(30) Priority: 05.12.1991 JP 321640/91
(43) Date of publication of application: 21.07.1993
(73) Proprietor: MATSUSHITA ELECTRIC INDUSTRIAL CO., LTD., Kadoma-shi, Osaka-fu, 571 (JP)
(72) Inventor: Nagata, Yuji, Yao-shi, Osaka-fu (JP); Mitani, Satoru, Hirakata-shi, Osaka-fu (JP); Nakamura, Kazuo, Toyonaka-shi, Osaka-fu (JP)
(74) Representative: Eisenführ, Speiser & Partner

(56) References cited:
- US-A- 3 840 898
- US-A- 4 052 748
- IBM TECHNICAL DISCLOSURE BULLETIN. vol. 20, no. 2, July 1977, ARMONK, NY, US pages 791 - 793 L. T. ROMANKIW
- PATENT ABSTRACTS OF JAPAN vol. 8, no. 36 (E-227)(1473) 16 February 1984 & JP-A-58 192 391 ( HITACHI SEISAKUSHO K.K. ) 9 November 1983
- Book no. , 1990, 'MAGNETIC HEADS FOR DIGITAL RECORDING', P. CIUREANU ET AL. ELSEVIER, AMSTERDAM

## Description

### BACKGROUND OF THE INVENTION

### 1. Field of the Invention

The present invention generally relates to a magnetic head which is mounted on a magnetic recording, reproducing apparatus for recording/reproducing the information stored onto the magnetic recording medium. More particularly, the present invention relates to a magneto-resistive head with a magneto-resistive effect being read as a principle.

### 2. Description of the Prior Art

IBM TECHNICAL DISCLOSURE BULLETIN, vol. 20, no. 2, July 1977, ARMONK, N.Y., USA, pages 791-793, L. T. ROMANKIW, "Magnetically coupled barberpole MR head with built-in longitudinal bias structure and process" representing the closest prior art from which the invention proceeds discloses a thin film magnetic head of magneto-resistive type comprising a front yoke and a back yoke for leading a signal magnetic field from a recording medium to a substantially rectangularly shaped magneto-resistive element, the magneto-resistive element formed on a magnetic basic plate and having an initial magnetisation in a direction substantially parallel to the lengthwise direction of the magneto-resistive layer, the front yoke, the magneto-resistive layer, the back yoke, the magnetic basic plate and the recording medium thus forming a closed magnetic circuit for the signal magnetic field, two current supplying electrodes connected to the respective ends of the magneto-resistive element, a plurality of electrodes formed on the magneto-resistive layer and extending longitudinally in a direction which is oblique to the lengthwise direction of the magneto-resistive element, and a magnetic field applying means for applying a magnetic field to the magneto-resistive layer in the direction of the initial magnetisation of the magneto-resistive layer, wherein the magnetic field applying means comprises a plurality of discrete hard magnetic film portions.

Also, "Magnetic Heads for Digital Recording", P. Ciureanu and H. Gavrila, ELSEVIER, 1990, pages 655-656 teaches to place a MR element between a front yoke and a back yoke so that the front yoke, the MR element, the back yoke, a basic magnetic plate and the recording medium form a closed magnetic circuit.

US-A-40 52 748 discloses a magnetic head for detecting information-representing magnetic fields on a magnetic recording medium and comprising an elongate magnetic-resistive element of magnetically anisotropic material which at its ends has contacts for connection to a current or a voltage source. In order to linearize the playback characteristic of the element, the easy axis of magnetization coincides with the longitudinal direction of the element and means are present which force the current to travel at an angle of minimum 15° and maximum 75° with the longitudinal direction. These means consist in particular of equipotential strips provided on the element.

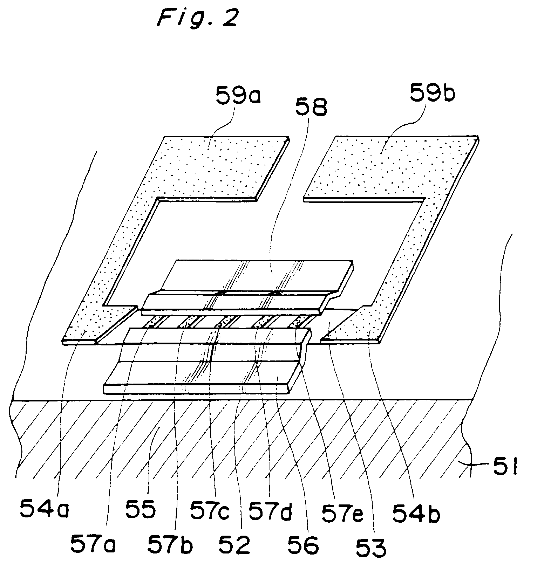

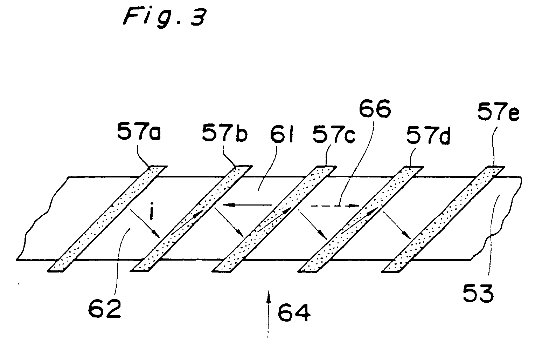

A similar magneto-resistive head shown in Fig. 2 is known as a further conventional magneto-resistive head disclosed in JP-A-50 134 624. A gap insulating layer 52, a rectangular shaped magneto-resistive element 53 composed of a Ni-Fe alloy thin film or the like, a pair of electrodes 54a, 54b, inclined electrodes 57a, 57b, 57c, 57d, 57e, a front yoke 56 and a back yoke 58 and so on for guiding signal magnetic flux stored on the magnetic recording medium from the magnetic tape sliding face 55 to the magneto-resistive element are sequentially laminated on the magnetic basic plate 51 in Fig. 2 through an insulating layer (not shown). The magneto-resistive head is connected with an exterior circuit through terminals 59a, 59b. A magneto-resistive element is required to be made as a single magnetic domain and to specify the direction of the magnetization so as to normally operate the conventional magneto-resistive head. Fig. 3 is an essential portion enlarging view of the magneto-resistive element and its environs of Fig. 2. When the direction of the driving current is shown in reference numeral 62, the initial magnetization of the magneto-resistive element is required to be arranged in such a direction shown in reference numeral 61.

Reasons for it will be described hereinafter. When the magnetizing direction of the magneto-resistive element is mingled with the mutually opposite directions as in the 61, 66 in Fig. 3, the resistance change in each portion becomes reverse in the positive, negative when the signal magnetic field 64 is flowed into the magneto-resistive element. These are imposed so as to extremely reduce the output. As the reverse direction of magnetization exists within the magneto-resistive element, Barkhausen noises to be caused in the irregular movement in the magnetic wall can be generated.

In the conventional magneto-resistive head, the magnetizing direction within the magneto-resistive element is required to be set in a direction shown in a specific direction 61.

In the conventional magneto-resistive type thin film magnetic head, the magnetizing direction changes when the disturbance magnetic field of approximately 1600A/m is flowed into from outside as a mechanism for retaining the magnetizing direction of the magneto-resistive element once determined does not exist. The reproducing output becomes unstable so as to cause noises.

### SUMMARY OF THE INVENTION

Accordingly, the present invention has been developed with a view to substantially eliminating the above discussed drawbacks inherent in the prior art, and has for its essential object to provide an improved magneto-resistive head.

Another important object of the present invention is to provide an improved magneto-resistive head, with ease and lower price, which can remarkably improve the stability with respect to the disturbance magnetic field and also, obtain superior reproducing output with the Barkhausen noises being restrained from being caused.

In accomplishing these and other objects, according to the present invention, there is provided a thin film magnetic head of magneto-resistive type comprising a front yoke and a back yoke for leading a signal magnetic field from a recording medium to a substantially rectangularly shaped magneto-resistive element, said magneto-resistive element formed on a magnetic basic plate and having an initial magnetisation in a direction substantially parallel to the lengthwise direction of the magneto-resistive layer, said front yoke, said magneto-resistive layer, said back yoke, said magnetic basic plate and said recording medium thus forming a closed magnetic circuit for said signal magnetic field, two current supplying electrodes connected to the respective ends of said magneto-resistive element, a plurality of electrodes formed on said magneto-resistive layer and extending longitudinally in a direction which is oblique to the lengthwise direction of said magneto-resistive element, and a magnetic field applying means for applying a magnetic field to said magneto-resistive layer in the direction of said initial magnetisation of said magneto-resistive layer, wherein said magnetic field applying means comprises a plurality of discrete hard magnetic film portions, characterized in that one of said hard magnetic film portions is interposed between said magneto-resistive element and one of said plurality of electrodes and contacts said magneto-resistive element, adjacent ones of all of said hard magnetic film portions are spaced apart from one another in said lengthwise direction of said magneto-resistive element by at least 10 µm, and at least two of said plurality of electrodes are disposed directly on said magneto-resistive element.

Further advantageous embodiments are mentioned in the dependent claims.

According to the teaching of the present invention, the discrete portions of the hard magnetic film are spaced apart from one another by respective distances not less than 10 µm. Such feature has been found to lead to the advantageous effect that the magnetic field generated from the thin-film is not so strong as to create unsatisfactory reproducing sensibility. Further, the magneto-resistive head of the present invention hardly causes the Barkhausen noises. Also, the reproducing output extremely stable with respect to the disturbance magnetic field can be obtained.

### BRIEF DESCRIPTION OF THE DRAWINGS

These and other objects and features of the present invention will become apparent from the following description taken in conjunction with the preferred embodiment thereof with reference to the accompanying drawings, in which;
Fig. 1 is a plan view of a magneto-resistive element portion of a magneto-resistive head in a preferred embodiment of the present invention;
Fig. 2 is an outer appearance view of the conventional magneto-resistive head; and
Fig. 3 is an enlarged view of a magneto-resistive element portion essential portion of the conventional magneto-resistive head.
Fig. 4 shows a reproducing waveform with Barkhausen noises.

### DETAILED DESCRIPTION OF THE INVENTION

Before the description of the present invention proceeds, it is to be noted that like parts are designated by like reference numerals throughout the accompanying drawings.

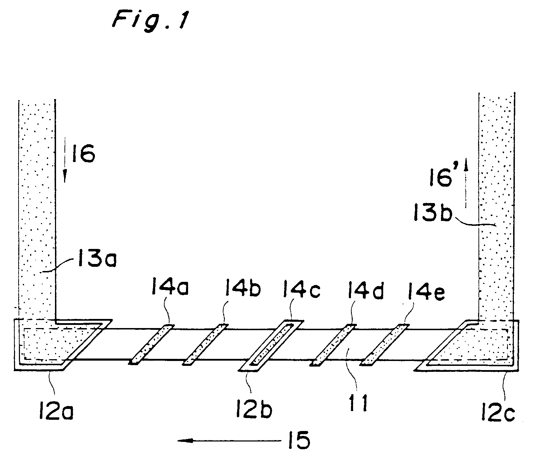

Fig. 1 is a preferred embodiment of the present invention. Fig. 1 shows the construction of a magneto-resistive element portion. In the present embodiment, a rectangular shaped magneto-resistive element 11 is formed on a magnetic basic plate (not shown) of a Ni-Zn ferrite or the like. Hard magnetic layers 12a, 12b, 12c of a Co-P alloy thin film or a Co-Pt alloy thin film or the like are formed on the magneto-resistive element. Electrodes 13a, 13b and an inclined electrode 14c are formed, in almost a similar shape, formed on their upper portions. The other inclined electrodes 14a, 14b, 14d, 14e are formed directly on the magneto-resistive element. After the completion, the magneto-resistive head in the embodiment is magnetized in the longitudinal direction 15 of such a magneto-resistive element as shown. The driving current is flowed in the direction of an arrow mark 16.

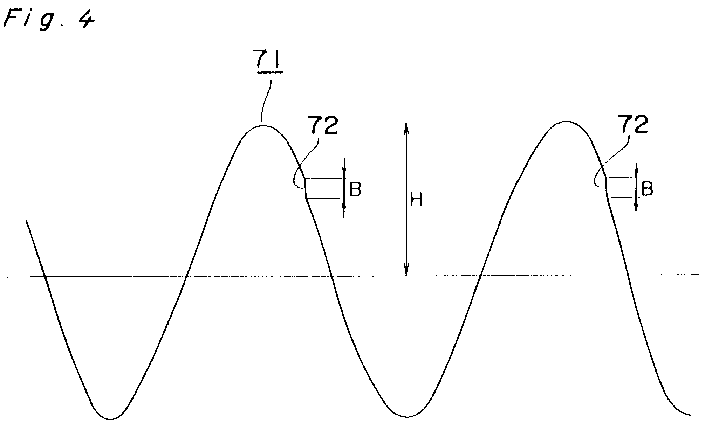

Also, it is noted that the magneto-resistive head of the present embodiment has not so large amount of Barkhausen noises. Generally, the Barkhausen noises are shown exemplary with a curve of Fig. 4. Namely, Fig. 4 shows a reproducing waveform 71 of the present embodiment, wherein there is happened to generate an unsuccessive jumping portion 72 in the reproducing waveform. The strengthness of Barkhausen noises can be expressed by the ratio between the height H of reproducing waveform and the jumping height B of Barkhausen noises, i.e., B/H. The ratio B/H of the magneto-resistive head of the present embodiment is less than 1 %. On the contrary, the conventional magneto-resistive head which does not have a hard magnetic film is lowered the reproducing output into the times of 1/2 to 1/5 in the disturbing magnetic field having less than 800 A/m, and is unstable the strengthness of reproducing output with changing time by time, so that the Barkhausen noises are large, that is, more than 5 %.

The arrangement of the hard magnetic film is determined in accordance with the reproduction sensitivity of the magneto-resistive element and the stability with respect to the disturbance magnetic field. Namely, when the number of the hard magnetic films images increases, the large magnetic field is applied to the magneto-resistive element, thus increasing the stability with respect to the disturbance magnetic field. When the number of the hard magnetic films increases, the magnetization of the magneto-resistive element lowers the sensitivity as the rotation of magnetization becomes difficult in accordance with the signal magnetic field. In the actual magneto-resistive head, the number of the hard magnetic layers are determined, considering these points. In the embodiment of the present invention, the track width is approximately 70 µm. The Co-Pt magnetic thin films of 0.15 µm in thickness as hard magnetic films are disposed by three in both the end portions and the center of the magneto-resistive element at the interval of approximately 40 µm. The magneto-resistive head at this time is stable with respect to the disturbance magnetic field of approximately 16000A/m. But, if the spaces providing among the thin film of Co-Pt is lower than 10 um, the magnetic field generated from the thin film of Co-Pt becomes strong more than necessity to lower the reproducing output at the times of 1/3 in comparison with the invention, so that it cannot be obtained the enough reproducing sensibility.

As the hard magnetic film is disposed in the same position as the electrode portion in the preferred embodiment of the present invention, large reproduction sensitivity is provided without any restriction to the effective sensitivity portion of the magneto-resistive element.

In the magneto-resistive head of the present invention, the hard magnetic thin film for applying the magnetic field in the longitudinal direction of the above described magneto-resistive element is arranged in the MR element and its vicinity having the electrode inclined with respect to the longitudinal direction so as to remarkably improve the stability with respect to the disturbance magnetic field. By the stability in the single magnetic domain condition of the magneto-resistive element, superior reproducing output can be obtained by the restraint of the Barkhausen noises, with its effects being great.

Although a magnetic basic plate such as Ni-Zn ferrite or the like is used as a basic plate in the embodiment, the same effect can be obtained by the use of the magnetic thin film formed on the nonmagnetic ceramic basic plate as a basic plate.

## Claims

1. A thin film magnetic head of magneto-resistive type comprising:
a front yoke (56) and a back yoke (58) for leading a signal magnetic field from a recording medium to a substantially rectangularly shaped magneto-resistive element (11);
said magneto-resistive element (11) formed on a magnetic basic plate (51) and having an initial magnetisation in a direction (15) substantially parallel to the lengthwise direction of the magneto-resistive layer;
said front yoke (56), said magneto-resistive layer, said back yoke (58), said magnetic basic plate (51) and said recording medium thus forming a closed magnetic circuit for said signal magnetic field;
two current supplying electrodes (13a, 13b) connected to the respective ends of said magneto-resistive element (11);
a plurality of electrodes (14a, 14b, 14c, 14d, 14e) formed on said magneto-resistive layer and extending longitudinally in a direction which is oblique to the lengthwise direction of said magneto-resistive element (11); and
a magnetic field applying means (12a, 12b, 12c) for applying a magnetic field to said magneto-resistive layer in the direction (15) of said initial magnetisation of said magneto-resistive layer, wherein said magnetic field applying means comprises a plurality of discrete hard magnetic film portions (12a, 12b, 12c);
characterized in that
one (12b) of said hard magnetic film portions is interposed between said magneto-resistive element (11) and one (14c) of said plurality of electrodes and contacts said magneto-resistive element (11);
adjacent ones of all of said hard magnetic film portions (12a, 12b, 12c) are spaced apart from one another in said lengthwise direction of said magneto-resistive element (11) by at least 10 µm; and
at least two (14a, 14b, 14d, 14e) of said plurality of electrodes are disposed directly on said magneto-resistive element.

2. A thin film magnetic head as claimed in claim 1, wherein said one (12b) of said hard magnetic film portions has a shape similar to that of said one (14c) of said plurality of electrodes.

3. A thin film magnetic head as claimed in claim 1 or 2, wherein said plurality of discrete hard magnetic film portions (12a, 12b, 12c) comprise three hard magnetic film portions, two (12a, 12c) of said hard magnetic film portions being located at opposite sides of said magneto-resistive element (11), respectively, in the lengthwise direction thereof, and said one (12b) of said hard magnetic film portions being disposed between said two (12a, 12c) of said hard magnetic film portions.

4. A thin film magnetic head as claimed in anyone of claims 1 to 3, wherein said two (12a, 12c) of said plurality of hard magnetic film portions are interposed between said magneto-resistive element (11) and said two current supplying electrodes (13a, 13b), respectively.

5. A thin film magnetic head as claimed in claim 4, wherein said one (14c) of said plurality of electrodes and said at least two (14a, 14b, 14d, 14e) of said plurality of electrodes are disposed between said two current supplying electrodes (13a, 13b) along the lengthwise direction of said magneto-resistive element (11).

6. A thin film magnetic head as claimed in anyone of the preceding claims, wherein said one (14c) of said plurality of electrodes is disposed between said at least two (14a, 14b, 14d, 14e) of said plurality of electrodes along the lengthwise direction of said magneto-resistive element (11).

## Patentansprüche

1. Dünnschicht-Magnetkopf vom Magneto-Widerstandstyp mit:
einem vorderen Magnetjoch (56) und einem hinteren Magnetjoch (58) zum Führen eines magnetischen Signalfeldes von einem Aufzeichnungsmedium zu einem im wesentlichen rechteckig ausgebildeten, Magneto-Widerstandselement (11);
wobei das Magneto-Widerstandselement (11) auf einer magnetischen Basisplatte (51) ausgebildet ist, und eine anfängliche Magnetisierung in einer Richtung (15) im wesentlichen parallel zu der Längsrichtung der Magneto-Widerstandsschicht aufweist;
wobei das vordere Magnetjoch (56), die Magneto-Widerstandsschicht, das hintere Magnetjoch (58), die magnetische Basisplatte (51) und das Aufzeichnungsmedium somit einen geschlossenen magnetischen Kreis für das magnetische Signalfeld bilden;
zwei Stromzuführungselektroden (13a, 13b), die mit den entsprechenden Enden des Magneto-Widerstandselements (11) verbunden sind;
einer Vielzahl von Elektroden (14a, 14b, 14c, 14d, 14e), die auf der Magneto-Widerstandsschicht ausgebildet sind und sich longitudinal in einer Richtung erstrecken, die schräg zu der Längsrichtung des Magneto-Widerstandselements (11) verläuft; und
magnetische Feldanlegemittel (12a, 12b, 12c) zum Anlegen eines magnetischen Feldes an die Magneto-Widerstandsschicht in der Richtung (15) der anfänglichen Magnetisierung der Magneto-Widerstandsschicht, wobei das magnetische Feldanlegemittel eine Vielzahl von diskreten hartmagnetischen Schichtabschnitten (12a, 12b, 12c) aufweist;
dadurch gekennzeichnet, daß
einer (12b) der hartmagnetischen Schichtabschnitte zwischen dem Magneto-Widerstandselement (11) und einem (14c) der Vielzahl von Elektroden angeordnet ist und das Magneto-Widerstandselement (11) kontaktiert;
Benachbarte von allen hartmagnetischen Schichtabschnitten (12a, 12b, 12c) sind voneinander in einer Längsrichtung des Magneto-Widerstandselements (11) um mindestens 10 µm beabstandet; und
mindestens zwei (14a, 14b, 14d, 14e) der Vielzahl von Elektroden sind direkt auf dem Magneto-Widerstandselement angeordnet.

2. Dünnschicht-Magnetkopf nach Anspruch 1, wobei der eine (12b) der hartmagnetischen Schichtabschnitte eine Form aufweist, die ähnlich zu der einen (14c) der Vielzahl von Elektroden ist.

3. Dünnschicht-Magnetkopf nach Anspruch 1 oder 2, wobei die Vielzahl von diskreten hartmagnetischen Schichtabschnitten (12a, 12b, 12c) drei hartmagnetische Schichtabschnitte enthält, wobei zwei (12a, 12c) der hartmagnetischen Schichtabschnitte an gegenüberliegenden Seiten des Magneto-Widerstandselements (11) angeordnet sind, in Längsrichtung desselben, und der eine (12b) der hartmagnetischen Schichtabschnitte zwischen den beiden (12a, 12c) der hartmagnetischen Schichtabschnitte angeordnet ist.

4. Dünnschicht-Magnetkopf nach einem der Ansprüche 1 bis 3, wobei die beiden (12a, 12c) der Vielzahl von hartmagnetischen Schichtabschnitten zwischen dem Magneto-Widerstandselement (11) beziehungsweise den beiden Stromzuführelektroden (13a, 13b) angeordnet sind.

5. Dünnschicht-Magnetkopf nach Anspruch 4, wobei die eine (14c) der Vielzahl von Elektroden und mindestens zwei (14a, 14b, 14d, 14e) der Vielzahl von Elektroden zwischen den beiden Stromzuführelektroden (13a, 13b) entlang der Längsrichtung des Magneto-Widerstandselements (11) angeordnet sind.

6. Dünnschicht-Magnetkopf nach einem der vorstehenden Ansprüche, wobei die eine (14c) der Vielzahl von Elektroden zwischen den mindestens zwei (14a, 14b, 14d, 14e) der Vielzahl von Elektroden entlang der Längsrichtung des Magneto-Widerstandselements (11) angeordnet ist.

## Revendications

1. Tête magnétique du type magnéto-résistif à film mince comprenant :
un étrier avant (56) et un étrier arrière (58) destinés à conduire un champ magnétique de signaux depuis un moyen d'enregistrement jusqu'à un élément magnéto-résistif de forme sensiblemement rectangulaire (11) ;
ledit élément magnéto-résistif (11) étant formé sur un plateau magnétique de base (51) et ayant une magnétisation initiale dans une direction (15) sensiblement parallèle à la direction dans le sens de la longueur de la couche magnéto-résistive ;
ledit étrier avant (56), ladite couche magnéto-résistive, ledit étrier arrière (58), ledit plateau de base magnétique (51) et ledit moyen d'enregistrement formant ainsi un circuit magnétique fermé destiné audit champ magnétique de signaux :
deux électrodes de fourniture de courant (13a, 13b) connectées aux extrémités respectives dudit élément magnéto-résistif (11) ;
une pluralité d'électrodes (14a, 14b, 14c, 14d, 14e) formées sur ladite couche magnéto-résistive et s'étendant longitudinalement dans une direction qui est oblique par rapport à la direction dans le sens de la longueur dudit élément magnéto-résistif (11) ; et
un moyen d'application de champ magnétique (12a, 12b, 12c) destiné à appliquer un champ magnétique à ladite couche magnéto-résistive dans la direction (15) de ladite magnétisation initiale de ladite couche magnéto-résistive, dans laquelle ledit moyen d'application de champ magnétique comprend une pluralité de parties séparées de film magnétique dur (12a,12b, 12c) ;
caractérisée en ce que
l'une (12b) desdites parties de film magnétique dur est intercalée entre ledit élément magnéto-résistif (11) et l'une (14c) des électrodes de ladite pluralité d'électrodes et est en contact avec ledit élément magnéto-résistif (11) ;
celles parmi toutes les parties de film magnétique dur (12a, 12b, 12c) qui sont adjacentes sont écartées l'une de l'autre d'au moins 10µm dans ladite direction dans le sens de la longueur dudit élément magnéto-résistif (11); et
au moins deux (14a, 14b, 14d, 14e) des électrodes de ladite pluralité d'électrodes sont disposées directement sur ledit élément magnéto-résistif.

2. Tête magnétique à film mince selon la revendication 1, dans laquelle ladite une (12b) desdites parties de film magnétique dur a une forme similaire à celle de ladite une (14c) électrode de ladite pluralité d'électrodes.

3. Tête magnétique à film mince selon la revendication 1 ou 2, dans laquelle ladite pluralité de parties séparées de film magnétique dur (12a, 12b, 12c) comprennent trois parties de film magnétique dur, deux (12a, 12c) desdites parties de film magnétique dur étant situées respectivement sur des côtés opposés dudit élément magnéto-résistif (11), dans la direction suivant le sens de la longueur de celui-ci, et dans laquelle ladite l'une (12b) desdites parties de film magnétique dur est disposée entre les deux (12a, 12c) desdites parties de film magnétique dur.

4. Tête magnétique à film mince selon l'une quelconque des revendications 1 à 3, dans laquelle lesdites deux (12a, 12c) parties de film magnétique dur de ladite pluralité de parties de film magnétique dur sont intercalées respectivement entre ledit élément magnéto-résistif (11) et lesdites deux électrodes de fourniture de courant (13a, 13b).

5. Tête magnétique à film mince selon la revendication 4, dans laquelle ladite une électrode (14c) de ladite pluralité d'électrodes et lesdites au moins deux (14a, 14b, 14d, 14e) électrodes de ladite pluralité d'électrodes sont disposées entre deux électrodes de fourniture de courant (13a, 13b) suivant la direction dans le sens de la longueur dudit élément magnéto-résistif (11).

6. Tête magnétique à film mince selon l'une quelconque des revendications précédentes, dans laquelle ladite une électrode (14c) de ladite pluralité d'électrodes est disposée entre lesdite au moins deux (14a, 14b, 14d, 14e) électrodes de ladite pluralité d'électrodes suivant la direction dans le sens de la longueur dudit élément magnéto-résistif (11).
